# EUROPÄISCHE PATENTSCHRIFT

(11) **EP 3 628 511 B1**
(45) Veröffentlichungstag und Bekanntmachung des Hinweises auf die Patenterteilung: **23.06.2021**
(21) Anmeldenummer: 19192432.3
(22) Anmeldetag: 20.08.2019
(51) Int. Cl.: B60C 11/04, B60C 11/13, B60C 11/03

(54) **FAHRZEUGLUFTREIFEN**
PNEUMATIC TYRE
PNEUMATIQUES DE VÉHICULE

(30) Priorität: 27.09.2018 DE 102018216560
(43) Veröffentlichungstag der Anmeldung: 01.04.2020
(73) Patentinhaber: Continental Reifen Deutschland GmbH, 30165 Hannover (DE)
(72) Erfinder: Baumgartner, Lars, 30165 Hannover (DE)
(74) Vertreter: Continental Corporation

(56) Entgegenhaltungen:
- EP-A1- 3 230 087
- EP-A2- 2 108 531
- DE-U1-202008 008 298
- JP-A- 2010 047 134
- JP-A- 2010 132 181
- US-A1- 2016 152 084

## Beschreibung

Die Erfindung betrifft einen Fahrzeugluftreifen mit einem Laufstreifen mit zumindest einer durch eine auf Profiltiefe ausgeführten Umfangsrille begrenzten, schulterseitigen Profilrippe, in welcher eine Vielzahl von parallel zueinander verlaufenden, in einem Abstand von 3,0 mm bis 10,0 mm vor der Umfangsrille endende Querrillen ausgebildet ist, welche jeweils einen Rillengrund und eine am laufstreifeninnenseitigen Ende der Querrille in Fortsetzung des Rillengrundes zur Laufstreifenperipherie verlaufende Endflanke aufweisen, wobei in der schulterseitigen Profilrippe erste Querrillen und zweite Querrillen vorgesehen sind, wobei die ersten Querrillen in einem Abstand vor der Umfangsrille enden, welcher kleiner ist als der Abstand, in dem die zweiten Querrillen vor der Umfangsrille enden, wobei erste Querrillen auf zweite Querrille in Umfangsrichtung abwechselnd aufeinanderfolgen und wobei in der Profilrippe bei jeder zweiten Querrille von der Umfangsrille ausgehend eine in die Profilrippe hineinragende, zur Laufstreifenperipherie offene Vertiefung ausgebildet ist.

Ein derartiger Fahrzeugluftreifen ist beispielsweise aus der JP 2010 047 134 A bekannt. Der Laufstreifen dieses Fahrzeugluftreifens weist fünf durch Umfangsrillen voneinander getrennte Profilrippen auf. In den schulterseitigen Profilrippen ist jeweils eine Vielzahl von in Draufsicht parallel zueinander sowie gebogen verlaufenden, vor der entsprechenden Umfangsrille endenden ersten und zweiten Querrillen ausgebildet. Die in der einen schulterseitigen Profilrippe verlaufenden Querrillen sind in entgegengesetzter Umfangsrichtung zu den in der anderen schulterseitigen Profilrippe verlaufenden Querrillen gebogen. Bei den zweiten Querrillen, welche die in einem größeren Abstand vor der Umfangsrille endenden Querrillen sind, ist eine in die Profilrippe hineinragende Vertiefung ausgebildet. Dieser Reifen soll sich als Winterreifen und als Ganzjahresreifen eignen sowie gute Fahreigenschaften auf nasser und schneebedeckter Fahrbahn aufweisen.

Aus der DE 10 2009 044 361 A1 ist ein Fahrzeugluftreifen mit einem Laufstreifen bekannt, welcher eine schulterseitige Profilrippe mit Querrillen aufweist, die vor der die Profilrippe begrenzenden Umfangsrille in einem Abstand von 3,0 mm bis 5,0 mm enden und eine in Fortsetzung des Rillengrundes verlaufende Endflanke aufweisen. Die Endflanke verläuft, im Querschnitt betrachtet, flach S-förmig und weist einen mittleren Abschnitt auf, welcher zur radialen Richtung unter einem Winkel von 50° bis 70° verläuft. Da derartige Endflanken an den laufstreifeninnenseitigen Enden keine Kanten aufweisen, sollen sie das Abrollgeräusch des Reifens kaum oder nicht beeinflussen sowie ferner eine verwirbelungsarme Wasserableitung ermöglichen. Außerdem sollen die Endflanken die Steifigkeit der Profilrippe auf eine nicht näher definierte Weise positiv beeinflussen.

Aus der EP 3 181 378 A1 ist ein Fahrzeugluftreifen mit einem Laufstreifen bekannt, welcher ebenfalls eine schulterseitige Profilrippe mit Querrillen aufweist, die in einem Abstand vor der die Profilrippe begrenzenden Umfangsrille enden. Die Querrillen weisen einen Rillengrund auf, welcher sich aus einem laufstreifeninnenseitigen Grundabschnitt und einem laufstreifenaußenseitigen Grundabschnitt zusammensetzt, wobei die Querrillen ausgehend vom Anschlussbereich der Grundabschnitte zu ihren Enden kontinuierlich seichter werden. Die Querrillen sind jeweils mit einer Fase versehen, welche am Anschlussbereich der Grundabschnitte ihre größte Breite aufweist und am tiefsten in die Querrille hineinragt. Bei derart gestalteten Querrillen sollen sich die Rillenkanten beim Bremsen kaum "einrollen", wodurch die Trockenbremseigenschaften verbessert sein sollen.

Eine schulterseitige Profilrippe mit Querrillen, welche innerhalb der Profilrippe enden, weist im Vergleich zu einer schulterseitigen Profilrippe mit Querrillen, welche zumindest einseitig in eine die Profilrippe begrenzende Umfangsrille einmünden, eine höhere Steifigkeit auf, wodurch Vorteile im Hinblick auf die Fahreigenschaften auf trockner Fahrbahn erzielt werden können. Beim Fahren auf nasser Fahrbahn wird eine Profilrippe mit Querrillen, welche innerhalb der Profilrippe enden, - im Vergleich zu einer Profilrippe mit einmündenden Querrillen - jedoch schlechter entwässert, wodurch beispielsweise die Nassgriffeigenschaften und das Aquaplaningverhalten des Reifens leiden.

Der Erfindung liegt daher die Aufgabe zugrunde, bei einem Fahrzeugluftreifen der eingangs genannten Art eine bessere Entwässerung der schulterseitigen Profilrippe zu ermöglichen, wobei die erwünschte Steifigkeit der Profilrippe erhalten bleiben soll.

Gelöst wird die gestellte Aufgabe erfindungsgemäß dadurch, dass die Endflanke jeder zweiten Querrille in Draufsicht zur Umfangsrichtung unter einem Winkel von 20° bis 45° verläuft.

Gemäß der Erfindung sind daher in der schulterseitigen Profilrippe innerhalb der Bodenaufstandsfläche unterschiedlich lang ausgeführte Querrillen vorgesehen, welche alternierend aufeinanderfolgen, wobei bei jeder kürzeren Querrille eine von der Umfangsrille ausgehende Vertiefung ausgebildet ist. Die Vertiefungen begünstigen im Bereich der kürzeren Querrillen die Wasserableitung von der Außenfläche der Profilrippe in die Umfangsrille. Dadurch sowie bedingt durch die alterierenden kürzeren und längen Querrillen bleibt eine optimale Steifigkeit der Profilrippe erhalten. Die Endflanken der zweiten Querrillen tragen dazu bei, die Profilrippe zu stabilisieren.

Gemäß einer bevorzugten Ausführungsvariante ist jede Vertiefung mit der ihr zugehörigen zweiten Querrille fluchtend ausgebildet. Derartige Vertiefungen bewirken in Kombination mit der jeweils zugehörigen Querrille eine besonders wirkungsvolle Entwässerung der schulterseitigen Profilrippe.

Im Hinblick auf die Steifigkeit der Profilrippe ist es vorteilhaft, wenn zwischen jeder Vertiefung und der ihr zugehörigen zweiten Querrille ein bis zur Laufstreifenperipherie reichender Profilrippensteg verbleibt.

Alternativ ist es bevorzugt, wenn zwischen jeder Vertiefung und der ihr zugehörigen zweiten Querrille ein Profilrippensteg verbleibt, welcher gegenüber der Laufstreifenperipherie um 1,0 mm bis 4,0 mm, insbesondere bis zu 2,0 mm, vertieft ist. Ein solcher Profilrippensteg begünstigt zusätzlich die Entwässerung der Profilrippe.

Gemäß einer weiteren bevorzugten Ausführungsvariante weist jede Vertiefung eine maximale Breite auf, welche 90% bis 110%, insbesondere 95% bis 105%, einer innerhalb der Bodenaufstandsfläche gemessenen maximalen Breite der ihr zugehörigen zweiten Querrille beträgt.

Es ist ferner bevorzugt, wenn die Endflanke jeder zweiten Querrille, im Querschnitt betrachtet, zumindest über den Großteil ihrer Erstreckung zur radialen Richtung unter einem Winkel von 4° bis 16°, insbesondere von 6° bis 10°, verläuft. Derart geneigte Endflanken tragen insbesondere zu einer Stabilisierung der Profilrippe bei.

Gemäß einer weiteren bevorzugten Ausführungsvariante weist jede Vertiefung an ihrem in der Profilrippe liegenden Ende eine Endflanke auf, welche sich in Richtung zur Laufstreifenperipherie der Endflanke der zugehörigen zweiten Querrille annähert. Dadurch wird die Profilrippe auch in den Bereichen zwischen den Vertiefungen und den Querrillen gut stabilisiert.

Weitere bevorzugte Maßnahmen tragen zusätzlich dazu bei, die Profilrippe zu stabilisieren. Einer dieser Maßnahmen besteht darin, dass die Endflanke der Vertiefung, im Querschnitt betrachtet, zumindest über den Großteil ihrer Erstreckung zur radialen Richtung unter einem Winkel von 4° bis 16°, insbesondere von 6° bis 10°, verläuft.

Ferner ist es in diesem Zusammenhang von Vorteil, wenn die Endflanke der Vertiefung in Draufsicht zur Umfangsrichtung unter einem Winkel von 20° bis 45° verläuft.

Gemäß einer weiteren bevorzugten Variante, beträgt der Abstand, in welchem die ersten Querrillen vor der Umfangsrille enden, 3,0 mm bis 8,0 mm. Diese Maßnahme ist auch für eine gute Entwässerung der Profilrippe von Vorteil.

In diesem Zusammenhang ist es ferner vorteilhaft, wenn der Abstand, in welchem die zweiten Querrillen vor der Umfangsrille enden, 5,0 mm bis 10,0 mm beträgt.

Gemäß einer weiteren bevorzugten Variante weist jede Vertiefung zu der ihr zugehörigen zweiten Querrille in axialer Richtung einen Mindestabstand von 3,0 mm bis 5,0 mm auf.

Insbesondere ist es für eine gute Wasserableitung aus der Profilrippe günstig, wenn jede Vertiefung in radialer Richtung eine Tiefe aufweist, welche 1,5 mm bis 2,0 mm geringer ist als die Profiltiefe.

Gemäß einer weiteren bevorzugten Variante, mittels welcher insbesondere Vorteile im Hinblick auf das Abrollgeräusch erzielt werden, ist dadurch gekennzeichnet, dass sämtliche Querrillen in Draufsicht bogenförmig verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen Umfangsabschnitt einer schulterseitigen Profilrippe eines Laufstreifens eines Fahrzeugluftreifens und
Fig. 2 einen vergrößerten Schnitt entlang der Linie II-II der Fig. 1.

Gemäß der Erfindung ausgeführte Fahrzeugluftreifen sind insbesondere Reifen in Radialbauart für Personenkraftwagen, Vans oder Light-Trucks sowie vorzugsweise Sommerreifen.

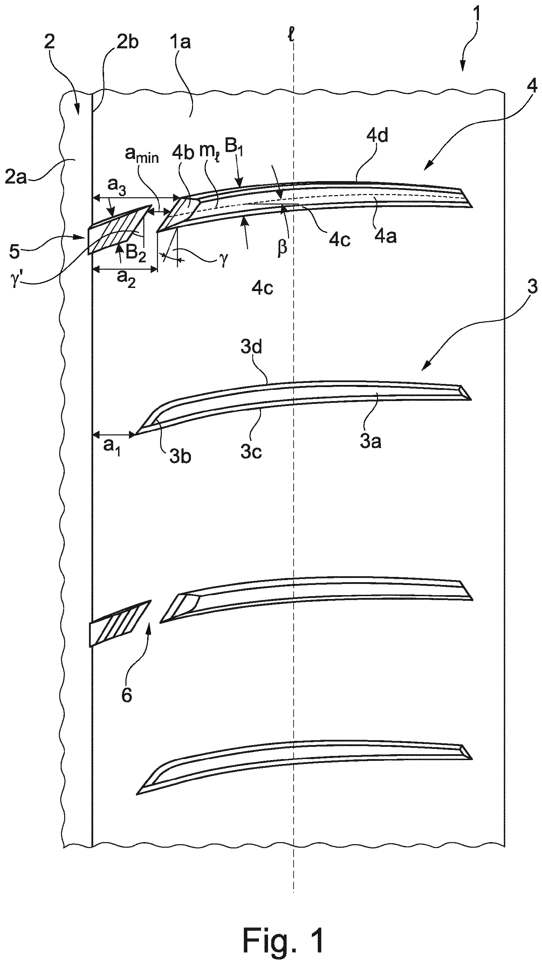

Fig. 1 zeigt einen Umfangsabschnitt einer schulterseitigen Profilrippe 1 mit einer an der Laufstreifenperipherie befindlichen Außenfläche 1a. Der seitliche Rand der Bodenaufstandsfläche (ermittelt mit einem auf einer Normfelge montierten Reifen, Last bei 70 % der maximalen Tragfähigkeit, Innendruck 85 % des Normdruckes, gemäß ETRTO-Standards) ist durch eine gestrichelte Linie 1 gekennzeichnet. Die nicht gezeigten Laufstreifenbereiche können in bekannter Weise ausgeführt sein, wobei im zweiten, nicht gezeigten schulterseitigen Laufstreifenbereich vorzugsweise eine zur schulterseitigen Profilrippe 1 analog ausgeführte schulterseitige Profilrippe vorgesehen ist.

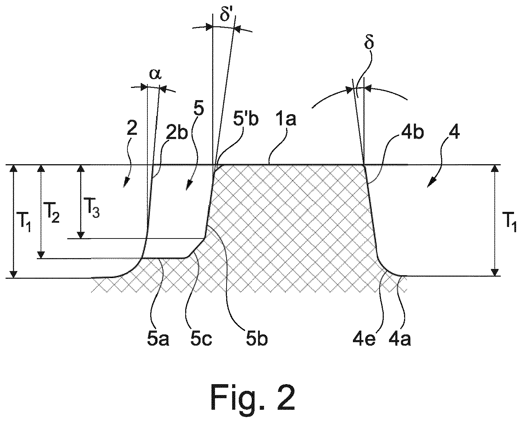

Die schulterseitige Profilrippe 1 ist laufstreifeninnseitig von einer in Fig. 1 lediglich angedeuteten, beim gezeigten Ausführungsbeispiel in Draufsicht gerade verlaufenden, schulterseitigen Umfangsrille 2 begrenzt, welche auf die jeweils vorgesehene Profiltiefe T₁ (Fig. 2) ausgeführt ist, die für Personenkraftwagen, Vans oder Light-Trucks üblicherweise 6,5 mm bis 8,5 mm beträgt. Die Umfangsrille 2 ist durch einen Rillengrund 2a und zwei Rillenflanken 2b, von welchen nur eine zu sehen ist, begrenzt, wobei die Rillenflanken 2b zur radialen Richtung beispielsweise unter einem Winkel α (Fig. 2) von bis zu 12° verlaufen.

Die schulterseitige Profilrippe 1 ist beim gezeigten Ausführungsbeispiel mit einer Vielzahl von längeren Querrillen 3 und kürzeren Querrillen 4 versehen, welche vor der Umfangsrille 2 enden und, in Draufsicht zumindest im Wesentlichen parallel zueinander verlaufen, wobei in Umfangsrichtung jeweils eine Querrille 3 abwechselnd auf eine Querrille 4 folgt, sodass die Querrillen 3 und die Querrillen 4 alternierend in der Profilrippe 1 ausgebildet sind. Die Querrillen 3 enden vor der Umfangsrille 2 in einem in axialer Richtung ermittelten Abstand a₁ von 3,0 mm bis 8,0 mm die Querrillen 4 enden vor der Umfangsrille 2 in einem in axialer Richtung ermittelten Abstand a₂ von 5,0 mm bis 10,0 mm, wobei der Abstand a₂ größer ist als der Abstand a₁.

Die Querrillen 3, 4 verlaufen über den seitlichen Rand der Bodenaufstandsfläche hinaus sowie beim gezeigten Ausführungsbeispiel in Draufsicht leicht gebogen und erstrecken sich - bezogen auf Mittellinien m₁ - zur axialen Richtung unter einem Winkel β von insbesondere bis zu 10°, vorzugsweise von bis zu 5°. Ferner sind die Querrillen 3, 4 innerhalb der Bodenaufstandsfläche vorzugsweise auf Profiltiefe ausgeführt (in Fig. 2 für eine Querrille 4 gezeigt), werden außerhalb der Bodenaufstandsfläche in bekannter Weise seichter und weisen an der Laufstreifenperipherie zumindest innerhalb der Bodenaufstandsfläche eine senkrecht zur Mittellinie m₁ ermittelte Breite B₁ von 3,0 mm bis 7,0 mm auf.

Jede längere Querrille 3 weist einen Rillengrund 3a, eine bogeninnenseitige Rillenflanken 3c, eine bogenaußenseitige Rillenflanke 3d und eine an das laufstreifeninnseitige Ende des Rillengrundes 3a anschließende, in Verlängerung des Rillengrundes 3a zur Außenfläche 1a der Profilrippe 1 sowie zwischen den Rillenflanken 3c, 3d verlaufende Endflanke 3b auf. Die bogeninnenseitige Rillenflanken 3c endet im bereits erwähnten Abstand a₁ vor der Umfangsrille 2.

Jede kürzere Querrille 4 weist einen Rillengrund 4a, eine bogeninnenseitige Rillenflanken 4c, eine bogenaußenseitige Rillenflanke 4d und eine an das laufstreifeninnseitige Ende des Rillengrundes 4a anschließende, in Verlängerung des Rillengrundes 4a zur Außenfläche 1a der Profilrippe 1 sowie zwischen den Rillenflanken 4c, 4d verlaufende Endflanke 4b (siehe auch Fig. 2) auf. Die bogenaußeninnenseitige Rillenflanke 4c endet im bereits erwähnten Abstand a₂ vor der Umfangsrille 2, die bogenaußenaußenseitige Rillenflanke 4d endet in einem in axialer Richtung ermittelten Abstand a₃ vor der Umfangsrille 2, welcher größer ist als der Abstand a₂. Die zwischen den Rillenflanken 4c, 4d verlaufende Endflanke 4b ist beim gezeigten Ausführungsbeispiel daher in Draufsicht zur Umfangsrichtung schräggestellt und verläuft zu dieser unter einem Winkel γ von 20° bis 45°. Gemäß Fig. 2 verläuft die Endflanke 4b, im Querschnitt betrachtet, zur radialen Richtung unter einem Winkel δ von 4° bis 16°, insbesondere von 6° bis 10°, beim gezeigten Ausführungsbeispiel von ca. 8°. Zwischen der Endflanke 4b und dem Rillengrund 4a ist vorzugsweise eine Übergangsrundung 4e ausgebildet, sodass die Endflanke 4b und der Rillengrund 4a, im Querschnitt betrachtet, knickfrei aneinander anschließen.

Wie Fig. 1 zeigt, ist axial seitlich jeder kürzeren Querrille 4 jeweils eine von der Umfangsrille 2 ausgehend, in die Profilrippe 1 hineinragende, zur Laufstreifenperipherie offene, sacknutartige, Vertiefung 5 ausgebildet. Unter einer axial seitlich einer kürzeren Querrille 4 ausgebildeten Vertiefung 5 wird dabei eine solche verstanden, welche entweder in Umfangsrichtung zur Querrille 4 nicht versetzt ist oder in Umfangsrichtung zur Querrille 4 derart versetzt ist, dass sie die Querrille 4 in axialer Richtung "überlappt". Vorzugsweise fluchtet die Vertiefung 5 mit der jeweiligen kürzeren Querrille 4, wie auch in Fig. 1 gezeigt. Jede Vertiefung 5 weist zur jeweiligen Querrille 4 in axialer Richtung einen Mindestabstand aₘᵢₙ von 3,0 mm bis 5,0 mm auf, sodass zwischen einer Vertiefung 5 und der zugehörigen Querrille 4 ein bis zur Außenfläche 1a der Profilrippe 1 reichender Profilrippensteg 6 verbleibt.

Die Vertiefung 5 weist eine Breite B₂ auf, welche 90% bis 110%, insbesondere 95% bis 105%, der Breite B₁ der Querrille 4 beträgt und besonders bevorzugter Weise mit der Breite B₁ übereinstimmt. Wie Fig. 2 zeigt, weist die Vertiefung 5 in radialer Richtung eine Tiefe T₂ auf, welche 1,5 mm bis 2,0 mm geringer ist als die Profiltiefe T₁. In der Tiefe T₂ ist die Vertiefung 5 durch einen parallel zur Außenfläche 1a der Profilrippe 1 ausgerichteten Boden 5a begrenzt. An ihrem innerhalb der Profilrippe 1 liegenden Ende ist die Vertiefung 5 durch eine zur Außenfläche 1a der Profilrippe 1 verlaufende Endflanke 5b begrenzt, welche beim gezeigten Ausführungsbeispiel in Draufsicht zur Umfangsrichtung schräggestellt ist und zu dieser unter einem Winkel γ' (Fig. 1) von 20° bis 45° verläuft. Bevorzugter Weise stimmt die Größe des Winkles γ' mit der Größe des Winkels γ überein, sodass die Endflanke 5b und die Endflanke 4b in Draufsicht parallel zueinander verlaufen. Gemäß Fig. 2 verläuft die Endflanke 5b, im Querschnitt betrachtet, zur radialen Richtung unter einem Winkel δ' von 4° bis 16°, insbesondere von 6° bis 10°, beim gezeigten Ausführungsbeispiel von ca. 8°, wobei die Größe des Winkles δ' vorzugsweise mit der Größe des Winkels δ übereinstimmt. Zwischen dem radial inneren Ende der Endflanke 5b und dem Boden 5a ist beim gezeigten Ausführungsbeispiel eine Schrägfläche 5c ausgebildet, wobei sich das radial äußere, an der Endflanke 5b liegende Ende der Schrägfläche 5c in radialer Richtung in einer Tiefe T₃ befindet, welche 2,5 mm bis 3,5 mm geringer ist als die Profiltiefe T₁. Ferner ist die Endflanke 5b beim gezeigten Ausführungsbeispiel zur Außenfläche 1a der Profilrippe 1 mit einer Schrägfläche 5'b mit einer Breite von beispielsweise 0,5 mm versehen, welche, im Querschnitt betrachtet, zur radialen Richtung beispielsweise unter einem Winkel von 45° verläuft.

Die Erfindung ist auf das beschriebene Ausführungsbeispiel nicht beschränkt.

Die Querrillen können eine von der beschriebenen und in Fig. 1 gezeigten Form abweichende Form aufweisen, wobei insbesondere die Rillenkanten der Querrillen zumindest abschnittsweise angefast sein können. Die im Profilband verlaufenden Querrillen können ferner auch gleich lang ausgeführt sein. Ferner ist es möglich, dass Querrillen, welche in einem kleineren Abstand vor der Umfangsrille enden kürzer ausgeführt sind, als Querrillen, welche in einem größeren Abstand vor der Umfangsrille enden. Außerdem kann der zwischen einer Vertiefung und der zugehörigen Querrille verbleibenden Profilrippensteg gegenüber der Laufstreifenperipherie um 1,0 mm bis 4,0 mm, insbesondere um bis zu 2,0 mm, vertieft sein.

### Bezugszeichenliste

- 1: schulterseitige Profilrippe
- 1a: Außenfläche
- 2: schulterseitige Umfangsrille
- 2a: Rillengrund
- 2b: Rillenflanke
- 3: Querrille
- 3a: Rillengrund
- 3b: Endflanke
- 3c: bogeninnenseitige Rillenflanke
- 3d: bogenaußenseitige Rillenflanke
- 4: Querrille
- 4a: Rillengrund
- 4b: Endflanke
- 4c: bogeninnenseitige Rillenflanke
- 4d: bogenaußenseitige Rillenflanke
- 4e: Übergangsrundung
- 5: sacknutartige Vertiefung
- 5a: Boden
- 5b: Endflanke
- 5'b: Schrägfläche
- 5c: Schrägfläche
- 6: Profilrippensteg
- a₁, a₂, a₃: Abstand
- aₘᵢₙ: Mindestabstand
- B₁, B₂: Breite
- l: Linie (seitlicher Rand der Bodenaufstandsfläche)
- m₁: Mittellinie
- T₁: Profiltiefe
- T₂, T₃: Tiefe
- α, β, γ,, γ', δ, δ': Winkel

## Patentansprüche

1. Fahrzeugluftreifen mit einem Laufstreifen mit zumindest einer durch eine auf Profiltiefe (T₁) ausgeführten Umfangsrille (2) begrenzten, schulterseitigen Profilrippe (1), in welcher eine Vielzahl von parallel zueinander verlaufenden, in einem Abstand (a₁, a₂) von 3,0 mm bis 10,0 mm vor der Umfangsrille (2) endende Querrillen (3, 4) ausgebildet ist, welche jeweils einen Rillengrund (3a, 4a) und eine am laufstreifeninnenseitigen Ende der Querrille (3, 4) in Fortsetzung des Rillengrundes (3a, 4a) zur Laufstreifenperipherie verlaufende Endflanke (3b, 4b) aufweisen,
wobei in der schulterseitigen Profilrippe (1) erste Querrillen (3) und zweite Querrillen (4) vorgesehen sind, wobei die ersten Querrillen (3) in einem Abstand (a₁) vor der Umfangsrille (2) enden, welcher kleiner ist als der Abstand (a₂), in dem die zweiten Querrillen (4) vor der Umfangsrille (2) enden, wobei erste Querrillen (3) auf zweite Querrille (4) in Umfangsrichtung abwechselnd aufeinanderfolgen und
wobei in der Profilrippe (1) bei jeder zweiten Querrille (4) von der Umfangsrille (2) ausgehend eine in die Profilrippe (1) hineinragende, zur Laufstreifenperipherie offene Vertiefung (5) ausgebildet ist.
**dadurch gekennzeichnet,**
**dass** die Endflanke (4b) jeder zweiten Querrille (4) in Draufsicht zur Umfangsrichtung unter einem Winkel (γ) von 20° bis 45° verläuft.

2. Fahrzeugluftreifen nach Anspruch 1, **dadurch gekennzeichnet, dass** jede Vertiefung (5) mit der ihr zugehörigen zweiten Querrille (4) fluchtend ausgebildet ist.

3. Fahrzeugluftreifen nach Anspruch 1 oder 2, **dadurch gekennzeichnet, dass** zwischen jeder Vertiefung (5) und der ihr zugehörigen zweiten Querrille (4) ein bis zur Laufstreifenperipherie reichender Profilrippensteg (6) verbleibt.

4. Fahrzeugluftreifen nach Anspruch 1 oder 2, **dadurch gekennzeichnet, dass** zwischen jeder Vertiefung (5) und der ihr zugehörigen zweiten Querrille (4) ein Profilrippensteg (6) verbleibt, welcher gegenüber der Laufstreifenperipherie um 1,0 mm bis 4,0 mm, insbesondere bis zu 2,0 mm, vertieft ist.

5. Fahrzeugluftreifen nach einem der Ansprüche 1 bis 4, **dadurch gekennzeichnet, dass** jede Vertiefung (5) eine maximale Breite (B₂) aufweist, welche 90% bis 110%, insbesondere 95% bis 105%, einer innerhalb der Bodenaufstandsfläche gemessenen maximalen Breite (B₁) der ihr zugehörigen zweiten Querrille (4) beträgt.

6. Fahrzeugluftreifen nach einem der Ansprüche 1 bis 5, **dadurch gekennzeichnet, dass** die Endflanke (4b) jeder zweiten Querrille (4), im Querschnitt betrachtet, zumindest über den Großteil ihrer Erstreckung zur radialen Richtung unter einem Winkel (δ) von 4° bis 16°, insbesondere von 6° bis 10°, verläuft.

7. Fahrzeugluftreifen nach einem der Ansprüche 1 bis 6, **dadurch gekennzeichnet, dass** jede Vertiefung (5) an ihrem in der Profilrippe (1) liegenden Ende eine Endflanke (5b) aufweist, welche sich in Richtung zur Laufstreifenperipherie der Endflanke (4b) der zugehörigen zweiten Querrille (4) annähert.

8. Fahrzeugluftreifen nach Anspruch 7, **dadurch gekennzeichnet, dass** die Endflanke (5b) der Vertiefung (5), im Querschnitt betrachtet, zumindest über den Großteil ihrer Erstreckung zur radialen Richtung unter einem Winkel (δ') von 4° bis 16°, insbesondere von 6° bis 10°, verläuft.

9. Fahrzeugluftreifen nach Anspruch 7 oder 8, **dadurch gekennzeichnet, dass** die Endflanke (5b) der Vertiefung (5) in Draufsicht zur Umfangsrichtung unter einem Winkel (γ') von 20° bis 45° verläuft.

10. Fahrzeugluftreifen nach einem der Ansprüche 1 bis 9, **dadurch gekennzeichnet, dass** der Abstand (a₁), in welchem die ersten Querrillen (3) vor der Umfangsrille (2) enden, 3,0 mm bis 8,0 mm beträgt.

11. Fahrzeugluftreifen nach einem der Ansprüche 1 bis 10, **dadurch gekennzeichnet, dass** der Abstand (a₂), in welchem die zweiten Querrillen (4) vor der Umfangsrille (2) enden, 5,0 mm bis 10,0 mm beträgt.

12. Fahrzeugluftreifen nach einem der Ansprüche 1 bis 11, **dadurch gekennzeichnet, dass** jede Vertiefung (5) zu der ihr zugehörigen zweiten Querrille (4) in axialer Richtung einen Mindestabstand (aₘᵢₙ) von 3,0 mm bis 5,0 mm aufweist.

13. Fahrzeugluftreifen nach einem der Ansprüche 1 bis 12, **dadurch gekennzeichnet, dass** jede Vertiefung (5) in radialer Richtung eine Tiefe (T₂) aufweist, welche 1,5 mm bis 2,0 mm geringer ist als die Profiltiefe (T₁).

14. Fahrzeugluftreifen nach einem der Ansprüche 1 bis 13, **dadurch gekennzeichnet, dass** sämtliche Querrillen (3, 4) in Draufsicht bogenförmig verlaufen.

## Claims

1. Vehicle pneumatic tyre with a tread strip with at least one shoulder-side profile rib (1) which is delimited by way of a circumferential groove (2) which is configured to profile depth (T₁), in which profile rib (1) a multiplicity of transverse grooves (3, 4) are configured which run parallel to one another, end at a spacing (a₁, a₂) of from 3.0 mm to 10.0 mm in front of the circumferential groove (2), and in each case have a groove bottom (3a, 4a) and an end flank (3b, 4b) which runs at the tread strip inner-side end of the transverse groove (3, 4) in a continuation of the groove bottom (3a, 4a) to the tread strip periphery,
first transverse grooves (3) and second transverse grooves (4) being provided in the shoulder-side profile rib (1), the first transverse grooves (3) ending at a spacing (a₁) in front of the circumferential groove (2), which spacing (a₁) is smaller than the spacing (a₂), at which the second transverse grooves (4) end in front of the circumferential groove (2), first transverse grooves (3) following second transverse grooves (4) in an alternating manner in the circumferential direction, and a depression (5) which protrudes into the profile rib (1) and is open to the tread strip periphery being configured in the profile rib (1) in the case of each second transverse groove (4), starting from the circumferential groove (2),
**characterized**
**in that** the end flank (4b) of every second transverse groove (4) runs at an angle (γ) of from 20° to 45° with respect to the circumferential direction in a top view.

2. Vehicle pneumatic tyre according to Claim 1, **characterized in that** each depression (5) is configured so as to be flush with the second transverse groove (4) which belongs to it.

3. Vehicle pneumatic tyre according to Claim 1 or 2, **characterized in that** a profile rib web (6) which reaches as far as the tread strip periphery remains between each depression (5) and the second transverse groove (4) which belongs to it.

4. Vehicle pneumatic tyre according to Claim 1 or 2, **characterized in that** a profile rib web (6) remains between each depression (5) and the second transverse groove (4) which belongs to it, which profile rib web (6) is deepened with respect to the tread strip periphery by from 1.0 mm to 4.0 mm, in particular by up to 2.0 mm.

5. Vehicle pneumatic tyre according to one of Claims 1 to 4, **characterized in that** each depression (5) has a maximum width (B₂) which is from 90% to 110%, in particular from 95% to 105%, of a maximum width (B₁), measured within the ground contact area, of the second transverse groove (4) which belongs to it.

6. Vehicle pneumatic tyre according to one of Claims 1 to 5, **characterized in that** the end flank (4b) of every second transverse groove (4) runs, as viewed in cross section, at least over the large part of its extent, at an angle (δ) of from 4° to 16°, in particular of from 6° to 10°, with respect to the radial direction.

7. Vehicle pneumatic tyre according to one of Claims 1 to 6, **characterized in that**, in its end which lies in the profile rib (1), each depression (5) has an end flank (5b) which approaches the end flank (4b) of the associated second transverse groove (4) in the direction of the tread strip periphery.

8. Vehicle pneumatic tyre according to Claim 7, **characterized in that** the end flank (5b) of the depression (5) runs, as viewed in cross section, at least over the large part of its extent, at an angle (δ') of from 4° to 16°, in particular of from 6° to 10°, with respect to the radial direction.

9. Vehicle pneumatic tyre according to Claim 7 or 8, **characterized in that** the end flank (5b) of the depression (5) runs at an angle (γ') of from 20° to 45° with respect to the circumferential direction in a top view.

10. Vehicle pneumatic tyre according to one of Claims 1 to 9, **characterized in that** the spacing (a₁), at which the first transverse grooves (3) end in front of the circumferential groove (2), is from 3.0 mm to 8.0 mm.

11. Vehicle pneumatic tyre according to one of Claims 1 to 10, **characterized in that** the spacing (a₂), at which the second transverse grooves (4) end in front of the circumferential groove (2), is from 5.0 mm to 10.0 mm.

12. Vehicle pneumatic tyre according to one of Claims 1 to 11, **characterized in that** each depression (5) is at a minimum spacing (aₘᵢₙ) of from 3.0 mm to 5.0 mm in the axial direction from the second transverse groove (4) which belongs to it.

13. Vehicle pneumatic tyre according to one of Claims 1 to 12, **characterized in that** each depression (5) has a depth (T₂) in the radial direction, which depth (T₂) is from 1.5 mm to 2.0 mm smaller than the profile depth (T₁).

14. Vehicle pneumatic tyre according to one of Claims 1 to 13, **characterized in that** all the transverse grooves (3, 4) run in an arcuate manner in a top view.

## Revendications

1. Pneumatique de véhicule comprenant une bande de roulement dotée d'au moins une nervure profilée (1) côté épaule, limitée par une rainure circonférentielle (2) réalisée à la profondeur de sculpture (T₁), dans laquelle est réalisée une pluralité de rainures transversales (3, 4) s'étendant en parallèle les unes aux autres et se terminant à une distance (a₁, a₂) de 3,0 mm à 10,0 mm devant la rainure circonférentielle (2), qui présentent respectivement un fond de rainure (3a, 4a) et un flanc d'extrémité (3b, 4b) s'étendant à l'extrémité côté intérieur de la bande de roulement de la rainure transversale (3, 4) dans le prolongement du fond de rainure (3a, 4a) jusqu'à la périphérie de bande de roulement,
dans lequel, dans la nervure profilée (1) côté épaule, des premières rainures transversales (3) et des deuxièmes rainures transversales (4) sont prévues, les premières rainures transversales (3) se terminant à une distance (a₁) devant la rainure circonférentielle (2) qui est inférieure à la distance (a₂) à laquelle se terminent les deuxièmes rainures transversales (4) devant la rainure circonférentielle (2), des premières rainures transversales (3) succédant en alternance à des deuxièmes rainures transversales (4) dans la direction circonférentielle, et
dans lequel, dans la nervure profilée (1), à une rainure transversale (4) sur deux, en partant de la rainure circonférentielle (2), un creux (5) faisant saillie dans la nervure profilée (1) et ouvert vers la périphérie de bande de roulement est réalisé,
**caractérisé en ce que** le flanc d'extrémité (4b) d'une rainure transversale (4) sur deux s'étend en vue de dessus selon un angle (γ) de 20° à 45° par rapport à la direction circonférentielle.

2. Pneumatique de véhicule selon la revendication 1, **caractérisé en ce que** chaque creux (5) est réalisé en alignement avec une deuxième rainure transversale (4) qui lui est associée.

3. Pneumatique de véhicule selon la revendication 1 ou 2, **caractérisé en ce qu'**entre chaque creux (5) et la deuxième rainure transversale (4) qui lui est associée, il reste une aile de nervure profilée (6) allant jusqu'à la périphérie de bande de roulement.

4. Pneumatique de véhicule selon la revendication 1 ou 2, **caractérisé en ce qu'**entre chaque creux (5) et la deuxième rainure transversale (4) qui lui est associée, il reste une aile de nervure profilée (6) qui est en retrait de 1,0 mm à 4,0 mm, en particulier de 2,0 mm, par rapport à la périphérie de bande de roulement.

5. Pneumatique de véhicule selon l'une quelconque des revendications 1 à 4, **caractérisé en ce que** chaque creux (5) présente une largeur maximale (B₂) qui est égale à 90 % à 110 %, en particulier à 95 % à 105 %, d'une largeur maximale (B₁), mesurée à l'intérieur de la surface de contact avec le sol, de la deuxième rainure transversale (4) qui lui est associée.

6. Pneumatique de véhicule selon l'une quelconque des revendications 1 à 5, **caractérisé en ce que** le flanc d'extrémité (4b) d'une rainure transversale (4) sur deux, vu en section transversale, s'étend au moins sur une majeure partie de son étendue par rapport à la direction radiale selon un angle (δ) de 4° à 16°, en particulier de 6° à 10°.

7. Pneumatique de véhicule selon l'une quelconque des revendications 1 à 6, **caractérisé en ce que** chaque creux (5) présente à son extrémité située dans la nervure profilée (1) un flanc d'extrémité (5b) qui s'approche de la deuxième rainure transversale (4) associée en direction de la périphérie de bande de roulement du flanc d'extrémité (4b).

8. Pneumatique de véhicule selon la revendication 7, **caractérisé en ce que** le flanc d'extrémité (5b) du creux (5) vu en section transversale, s'étend au moins sur une majeure partie de son étendue selon un angle (δ') de 4° à 16°, en particulier de 6° à 10°, par rapport à la direction radiale.

9. Pneumatique de véhicule selon la revendication 7 ou 8, **caractérisé en ce que** le flanc d'extrémité (5b) du creux (5), en vue de dessus, s'étend selon un angle (γ') de 20° à 45° par rapport à la direction circonférentielle.

10. Pneumatique de véhicule selon l'une quelconque des revendications 1 à 9, **caractérisé en ce que** la distance (a₁) à laquelle se terminent les premières rainures transversales (3) devant la rainure circonférentielle (2) est égale à 3,0 mm à 8,0 mm.

11. Pneumatique de véhicule selon l'une quelconque des revendications 1 à 10, **caractérisé en ce que** la distance (a₂) à laquelle se terminent les deuxièmes rainures transversales (4) devant la rainure circonférentielle (2) est égale à 5,0 mm à 10,0 mm.

12. Pneumatique de véhicule selon l'une quelconque des revendications 1 à 11, **caractérisé en ce que** chaque creux (5) présente par rapport à la deuxième rainure transversale (4) qui lui est associée une distance minimale (aₘᵢₙ) de 3,0 mm à 5,0 mm dans la direction axiale.

13. Pneumatique de véhicule selon l'une quelconque des revendications 1 à 12, **caractérisé en ce que** chaque creux (5) présente en direction radiale une profondeur (T₂) qui est inférieure de 1,5 mm à 2,0 mm à la profondeur de sculpture (T₁).

14. Pneumatique de véhicule selon l'une quelconque des revendications 1 à 13, **caractérisé en ce que** toutes les rainures transversales (3, 4), en vue de dessus, s'étendent en forme d'arc.
